# EUROPÄISCHE PATENTSCHRIFT

(11) **EP 3 699 112 B1**
(45) Veröffentlichungstag und Bekanntmachung des Hinweises auf die Patenterteilung: **06.10.2021**
(21) Anmeldenummer: 20155142.1
(22) Anmeldetag: 03.02.2020
(51) Int. Cl.: B65G 1/02, B65G 1/06

(54) **WARENLAGER, INSBESONDERE SHUTTLELAGER**
WAREHOUSE, ESPECIALLY SHUTTLE WAREHOUSE
ENTREPÔT, EN PARTICULIER ENTREPÔT NAVETTE

(30) Priorität: 21.02.2019 DE 102019104372
(43) Veröffentlichungstag der Anmeldung: 26.08.2020
(73) Patentinhaber: Nedcon B.V., 7005 BJ Doetinchem (NL)
(72) Erfinder: Frederiks, Jan Willem, 7009 AK Doetinchem (NL)
(74) Vertreter: Christophersen & Partner Partnerschaft mbB Patentanwälte

(56) Entgegenhaltungen:
- DE-A1-102014 114 978
- US-A1- 2014 346 130

## Beschreibung

Die Erfindung betrifft ein Warenlager, insbesondere Shuttlelager, mit einem aus Profilelementen zusammengesetzten Gestell für die Warenlagerung und mit mindestens einer Gasse für den Transport ein- und auszulagernder Waren mittels eines auf Schienen längs der Gasse verfahrbaren Verteilerfahrzeuges, wobei die Schienen an dem Gestell befestigt sind und jeweils aus in Schienenlängsrichtung aufeinanderfolgenden Schienensegmenten zusammengesetzt sind, wobei die Schienensegmente jeweils Profile mit einem Profilabschnitt sind, dessen Oberseite die Lauffläche für das Verteilerfahrzeug bildet.

Shuttlelager, wie sie z. B. aus der EP 3 321 216 A1 bekannt sind, sind Stückgutlager, bei denen die Ladeeinheiten, z.B. Waren oder mit Waren beladene Paletten, in einzelnen Kanälen hintereinander angeordnet werden oder sie zu beiden Seiten einer Transportgasse gelagert werden. Für das Einlagern, Auslagern oder auch Umlagern der Waren kommt ein Verteilerfahrzeug zum Einsatz, oft als "Shuttle" oder Satellitenfahrzeug bezeichnet. Dieses Fahrzeug ist dazu ausgebildet, die Waren oder Ladungsträger zu unterfahren, sodann anzuheben, und in dem so angehobenen Zustand an eine andere Position des Warenlagers zu transportieren. Derartige Verteilerfahrzeugen verfügen insbesondere über Mittel, um die Waren bzw. die die Waren stützenden Ladungsträger vollautomatisch anzuheben, aus den seitlich angeordneten Lagerpositionen in die Gasse zu ziehen und dann innerhalb und längs der Gasse zu bewegen. Die Schienen, auf denen das rollengelagerte Verteilerfahrzeug entlang der Gasse rollt, sind wegen ihrer erheblichen Länge segmentiert, d. h. sie sind aus aufeinanderfolgenden Schienensegmenten in Gestalt von Profilen zusammengesetzt. Die Profile liegen mit ihren einander benachbarten Enden gemeinsam auf einer Konsole auf und sind mit dieser verschraubt. Hinsichtlich dieser Verschraubung schlägt die EP 3 321 216 A1 die Verwendung von Einpressgewindebolzen als Verbindungselemente vor, da die Oberseite der Einpressgewindebolzen bündig mit der eigentlichen Lauffläche abschließt und so ein ruhiger Lauf des Verteilerfahrzeuges mit geringer Geräuschentwicklung erzielt werden soll.

Zur Geräuschentwicklung tragen aber nicht nur die in den Laufflächen verbauten Verbindungselemente bei. Auch die im Bereich des Aneinandergrenzens der Schienensegmente häufig vorhandenen Stöße führen zu einer Geräuschentwicklung und außerdem zu einer Erschütterung des Verteilerfahrzeuges und der darauf angeordneten Ladung während des Überfahrens der Schienenstöße. Denn in der Praxis unterliegt die Maßhaltigkeit der als Profile ausgebildeten Schienen und Schienensegmente deutlichen Schwankungen.

Bei dem Warenlager gemäß der DE 10 2014 114 496 A1 weisen die Schienensegmente in Schienenlängsrichtung gesehen links und rechts neben dem Schienenstoß je eine erste Aufnahme für jeweils ein sich senkrecht zur Schiene erstreckendes, bolzenförmiges Befestigungsmittel auf. Ferner ist eine Befestigungsklammer vorhanden. Diese weist zwei U-förmige Aussparungen auf zur jeweiligen Aufnahme der Befestigungsmittel. Die U-förmigen Aussparungen sind an dem jeweils äußeren Schenkel abgewinkelt ausgebildet.

Das Dokument DE 10 2014 114 978 A1 offenbart ein Warenlager gemäß dem Oberbegriff des Anspruchs 1.

Der Erfindung liegt die **Aufgabe** zugrunde, bei einem Shuttlelager durch konstruktive Maßnahmen Geräusche und Erschütterungen im Bereich aufeinanderfolgender Schienensegmente zu reduzieren, die ansonsten bei dem Überfahren durch das Verteilerfahrzeug ("Shuttle") auftreten würden.

Zur **Lösung** dieser Aufgabe wird bei einem Warenlager mit den eingangs angegebenen Merkmalen vorgeschlagen, dass eine im Bereich zweier aufeinanderfolgender Schienensegmente angeordnete Druckverteilerleiste mit einem Teil ihrer Länge gegen den die Lauffläche bildenden Profilabschnitt des ersten Schienensegments, und mit dem übrigen Teil ihrer Länge gegen den die Lauffläche bildenden Profilabschnitt des zweiten Schienensegments abgestützt ist, und dass mindestens ein Druckübertragungselement einerseits von unten gegen die Druckverteilerleiste und andererseits gegenüber einem in Bezug auf das Gestell starr angeordneten Widerlager abgestützt ist

Die Druckverteilerleiste stützt sich an den Unterseiten jener Profilabschnitte der zwei Schienensegmente ab, an denen oben die Laufflächen für das darauf rollende Verteilerfahrzeug ausgebildet sind. Die Laufflächen sind frei von Öffnungen für Befestigungsschrauben.

Die Druckverteilerleiste ist mit einem nach oben gerichteten Druck beaufschlagt. Durch diese Maßnahmen werden die die Laufflächen für das darauf rollende Verteilerfahrzeug bildenden Profilabschnitte in eine gegenseitige Fluchtung gebracht, und zwar ohne dass sich in den Laufflächen Befestigungselemente wie z. B. Schrauben oder deren Öffnungen befinden müssen. Vielmehr verlaufen die Laufflächen auch im Stoßbereich der aufeinanderfolgenden Schienensegmente flach und eben, wodurch das darauf rollende Verteilerfahrzeug ein ruhiges und erschütterungsfreies Laufverhalten zeigt.

Zwar ist die Ebenheit der Laufflächen zwangsläufig dort unterbrochen, wo benachbarte Schienensegmente aneinanderstoßen. Jedoch befindet sich an diesen Stoßbereichen kein nennenswerter Höhenversatz zwischen der Lauffläche des einen und der Lauffläche des anderen beteiligten Schienensegments. Vielmehr ist ein Höhenversatz der die Laufflächen aufweisenden Profilabschnitte durch die Wirkung der druckbelasteten Druckverteilerleiste unterbunden. Denn die Druckverteilerleiste ist mit einem Teil Ihrer Länge gegen die der Lauffläche abgewandte Seite des ersten Schienensegments, und mit dem übrigen Teil ihrer Länge gegen die der Lauffläche abgewandte Seite des zweiten beteiligten Schienensegments abgestützt. Entscheidend ist eine nach oben gerichtete, dauernde Druckkraft auf die an ihrer Oberseite vorzugsweise flach und eben gestaltete Druckverteilerleiste.

Diese dauernde Druckkraft wird erzielt, indem mindestens ein Druckübertragungselement, welches vorzugsweise selbst starr ausgebildet ist, einerseits von unten gegen die Druckverteilerleiste abgestützt ist, und dasselbe Druckübertragungselement andererseits gegenüber einem Widerlager abgestützt ist, wobei das Widerlager starr in Bezug auf das Gestell des Warenlagers angeordnet ist. Auch die Schienensegmente sind gestellfest befestigt, z. B. indem sie direkt an vertikalen Stützen des Gestells angeschraubt sind.

Wo sich das Widerlager befindet, ist nicht entscheidend, solange es gestellfest ist. Zum Beispiel kann sich das Widerlager an einem anderen Profilabschnitt desselben Schienensegments befinden.

Als Schienen dienen Profile aus zumindest einmal abgekantetem Metallblech. Die Praxis hat gezeigt, dass die Fertigungspräzision dieser industriell gefertigten Schienen Schwankungen unterliegt. Zwar sind die verwendeten Metallbleche von guter Maßhaltigkeit, was ihre Materialdicke, d.h. Blechdicke betrifft. Jedoch zeigen die durch Abkanten der Metallbleche geformten Profile eine Streuung ihrer Profilquerschnitte. Daher liegt der Erfindung die Erkenntnis zugrunde, dass im Stoßbereich zwischen aufeinanderfolgenden Schienensegmenten vorhandene Ungenauigkeiten eher auf mangelnde Maßhaltigkeit der Profilquerschnitte zurückzuführen ist, denn auf Schwankungen in der Materialdicke des Metallblechs, aus dem die Schienensegmente bestehen.

Mit den hier beschriebenen Maßnahmen werden daher stoßfreie Übergänge zwischen den Laufflächen aufeinanderfolgender Schienensegmente der Schiene erreicht.

Mit einer Ausgestaltung wird vorgeschlagen, dass das Druckübertragungselement hinsichtlich seiner Länge und/oder seiner Position in Richtung senkrecht zur Lauffläche einstellbar ausgebildet ist. Vorzugsweise ist das Druckübertragungselement eine Schraube oder ein Schraubbolzen.

Gemäß einer Ausgestaltung befindet sich das Widerlager, an dem sich das Druckübertragungselement abzustützen vermag, an einer Konsole. Die Konsole ist mit dem Schienensegment zumindest in Richtung senkrecht zur Lauffläche verbunden.

Ferner sieht eine Ausgestaltung vor, dass die Schienensegmente einen von dem die Lauffläche bildenden Profilabschnitt nach unten führenden, weiteren Profilabschnitt aufweisen, mit dem die Konsole verbunden ist.

Kommen im Bereich der Verbindung der zwei Schienensegmente zwei Konsolen zum Einsatz, so ist die erste Konsole nur mit dem ersten Schienensegment und die zweite Konsole nur mit dem zweiten Schienensegment verbunden.

Bevorzugt wird jedoch eine Bauform, bei der im Bereich der Verbindung der zwei Schienensegmente nur eine einzige Konsole zum Einsatz kommt, wobei diese Konsole sowohl mit dem ersten Schienensegment als auch mit dem zweiten Schienensegment verbunden ist.

Gemäß einer bevorzugten Ausgestaltung ist jedes Schienensegment mit einem daran ausgebildeten Befestigungsabschnitt unmittelbar gegen eine Montagefläche des Gestells befestigt, an der die Konsole nur mittelbar unter Zwischenlage des Befestigungsabschnitts befestigt ist.

Eine weitere Ausgestaltung ist gekennzeichnet durch insgesamt zwei Druckübertragungselemente, die einerseits beide gegen die Druckverteilerleiste abgestützt sind und die andererseits an getrennten Widerlagern abgestützt sind, von denen das erste Widerlager auf der Länge des ersten Schienensegments, und das zweite Widerlager auf der Länge des zweiten Schienensegments angeordnet ist.

Ausführungsbeispiele werden nachfolgend anhand der zugehörigen Figuren näher erläutert. Darin zeigen:
- Fig. 1: ein Warenlager und insbesondere Shuttlelager mit einem aus Profilelementen zusammengesetzten Gestell einschließlich einer Gasse für den Transport der ein- und auszulagernden Waren, wobei sich in der Gasse ein längs der Gasse verfahrbares, auf Laufrollen abgestütztes Verteilerfahrzeug befindet;
- Fig. 2: die in Fig. 1 bezeichnete Einzelheit II, nämlich der Bereich der Befestigung einer Schiene, welche die Lauffläche für das Verteilerfahrzeug bildet, an einer Stütze des Gestells;
- Fig. 3: eine Ansicht der Schiene und der Stütze entsprechend der in Fig. 1 eingezeichneten Blickrichtung III-III;
- Fig. 4: eine zweite Ausführungsform, wobei die Wiedergabe analog jener der Fig. 2 ist;
- Fig. 5: eine dritte Ausführungsform, wobei die Wiedergabe analog jener der Fig. 2 ist;
- Fig. 6a: eine Prinzipdarstellung, welche das der Erfindung zugrunde liegende Problem illustriert;
- Fig. 6b: eine Prinzipdarstellung der technischen Lösung, wie sie hier vorgeschlagen wird.

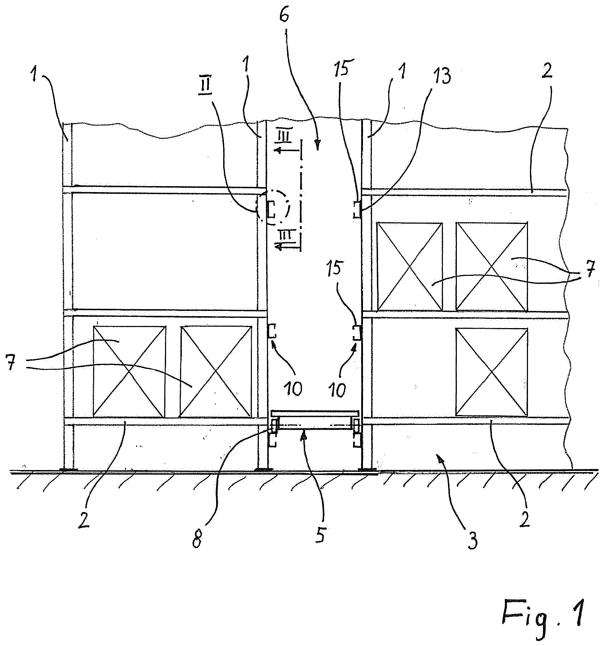

Die Fig. 1 zeigt in einer Übersichtsdarstellung ein als ein Gestell 3 ausgebildetes Warenlager in der Ausbildung als sogenanntes Shuttlelager. Als "Shuttle" bezeichnet wird ein auf Laufrollen abgestütztes, mit einer Hubplattform versehenes Verteilerfahrzeug 5, welches längs einer Gasse 6 des Warenlagers verfahrbar ist, und dabei unterschiedliche Positionen vor den einzelnen Lagerorten einnehmen kann. Die Fig. 1 zeigt hierzu Lagerorte beidseits der Gasse 6, wobei sich an einzelne der Lagerorte Waren 7 befinden. Diese Waren 7 können auch Warengewinde sein, welche jeweils auf einem Transportmittel wie z. B. einer Palette aufliegen.

Das Gestell 3 des Warenlagers setzt sich aus einer Vielzahl von Profilelementen 1, 2 zusammen. Zu diesen Profilelementen gehören vertikale Träger 1, welche die statische Grundstruktur des Warenlagers bilden, sowie horizontale Stützen oder Traversen 2, welche an den vertikalen Stützen 1 befestigt sind. Zu den Profilelementen des Gestells 3 gehören ferner Warenauflagen für die gelagerten Waren 7. Des Weiteren können zur Versteifung des Gestells 3 noch querverlaufende oder diagonale Profilelemente vorhanden sein.

Das Ein- und Auslagern der einzelnen Waren 7 erfolgt über die Gasse 6, in der das Verteilerfahrzeug 5 längs verfahrbar ist. Die Fig. 1 zeigt insoweit nur ein Verteilerfahrzeug 5 in einer Ebene, jedoch können sich entsprechende Verteilerfahrzeuge auch in den übrigen Ebenen befinden. Ebenso ist es möglich, mittels eines nicht dargestellten Hubmechanismus ein- und dasselbe Verteilerfahrzeug 5 in unterschiedliche Ebenen zu fördern, so dass dieses Fahrzeug dann auch die anderen Ebenen des Gestells 3 befahren und dort Waren 7 ein- und auslagern kann.

Das Verteilerfahrzeug 5 rollt auf Rollen 8, die zumindest zum Teil angetriebene Rollen sind. Üblicherweise verfügen derartige Verteilerfahrzeuge 5 über insgesamt vier Rollen 8, von denen zwei auf der linken, und zwei auf der rechten Fahrzeugseite angeordnet sind.

Zur Abstützung und zur seitlichen Führung der Rollen 8 sind in der Gasse 6 paarweise vorhandene Schienen 10 angeordnet. Die eine Schiene 10 befindet sich an der einen Seite der Gasse, und die andere Schiene 10 an der anderen Seite der Gasse. Die Schienen 10 sind an dem Gestell 3 des Warenlagers befestigt. Bevorzugt erfolgt die Befestigung der Schienen 10 an den dafür statisch besonders geeigneten vertikalen Stützen 1, z. B. mittels Schrauben.

Als Schienen 10 dienen Profile, die sich teils aus horizontalen und teils aus vertikalen Profilabschnitten zusammensetzen. Die Profile können geschlossene Profile oder Hohlprofile sein, oder offene Profile wie z. B. L-förmige oder S-förmige Profile. Bei dem hier ersten Ausführungsbeispiel sind die Schienen 10 als Profile von C-förmigem Querschnitt gestaltet, wobei ein vertikaler Profilabschnitt 13 der Schiene 10 an den Stützen 1 befestigt ist, wohingegen die offene Profilseite zu der Gasse 6 hin weist. Ein horizontaler Profilabschnitt 16 der Schiene 10 bildet mit seiner flachen Oberseite die Lauffläche 15 für die Rollen 8 des Shuttles.

Jede Schiene 10 ist insgesamt von erheblicher Länge, weshalb es montagetechnisch sinnvoll ist, die Schiene 10 zu segmentieren, d. h. in einzelne, aufeinanderfolgende Schienensegmente zu unterteilen.

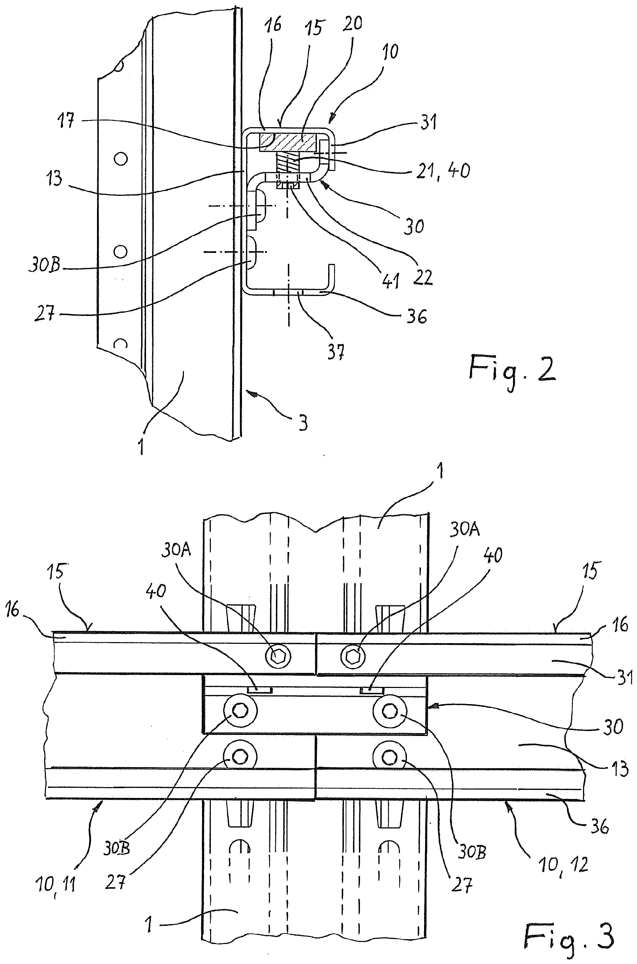

Hierzu zeigt Fig. 3 eine der beiden Schienen 10 im Bereich ihrer Verschraubung mit einer vertikalen Stütze 1 des Gestells. Zu erkennen ist insbesondere, dass in diesem Verschraubungsbereich ein erstes Schienensegment 11 und ein zweites Schienensegment 12 aneinanderstoßen. Das Aneinanderstoßen sollte so sein, dass die Lauffläche 15, die durch die oberen Profilabschnitte 16 der Schienensegmente 11, 12 gebildet wird, möglichst durchgehend gestaltet ist, d. h. ohne Stufe und ohne einen nennenswerten Höhenversatz der Lauffläche 15 an dem Schienensegment 11 zu der Lauffläche 15 an dem Schienensegment 12.

In der Praxis unterliegt die Präzision der die Schienensegmente 11, 12 bildenden Profile Schwankungen. Zwar sind die für die Herstellung der Schienensegmente verwendeten Metallbleche von guter Maßhaltigkeit, was ihre Blechdicke betrifft. Jedoch zeigen die durch Abkanten der Metallbleche hergestellten Schienensegmente eine gewisse Streuung ihrer Profilquerschnitte.

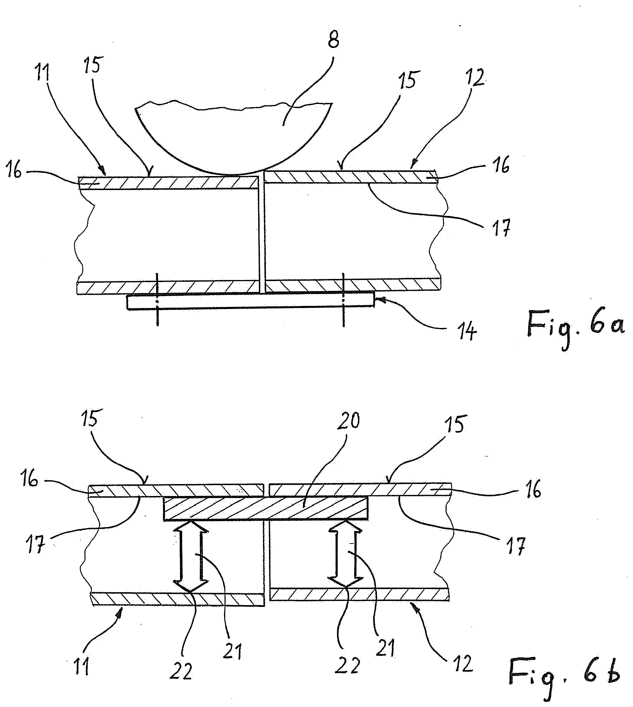

Die Fig. 6a illustriert dies. Die Gesamthöhe des links in Fig. 6a wiedergegebenen Schienensegments 11 ist herstellungsbedingt etwas geringer, als die Gesamthöhe des anderen Schienensegments 12. Dadurch kommt es zumindest dann zu einer leichten Stufe im Stoßbereich, wenn beide Schienensegmente 11, 12 mit ihrer Unterseite auf einer gemeinsamen, gestellfesten Konsole 14 befestigt sind. Beim Überfahren der einen Höhenversatz aufweisenden Laufflächen 15 kommt es zu Erschütterungen des anhand seiner Rolle 8 wiedergegebenen Verteilerfahrzeugs.

Anders verhält es sich bei den in Fig. 6b schematisch wiedergegebenen Maßnahmen. Die benachbarten Schienensegmente 11, 12 sind zwar an dem Gestell des Warenlagers angeschraubt, sie sind jedoch nicht mit ihrer Gesamthöhe auf einer gestellfesten Konsole 14 abgestützt. Stattdessen erfolgt eine Ausrichtung der Schienensegmente 11, 12 zueinander mittels einer Druckverteilerleiste 20. Die Druckverteilerleiste 20 stützt sich mit ihrer geraden, flachen Oberseite gegen die Unterseite jenes Profilabschnitts 16 der Schienensegmente 11, 12 ab, welcher auf seiner Oberseite die Lauffläche 15 bildet.

Die Anordnung ist dergestalt, dass sich die Druckverteilerleiste 20 mit einem Teil ihrer Länge gegen die der Lauffläche 15 abgewandte Rückseite 17 an dem ersten Schienensegment 11, und mit dem übrigen Teil ihrer Länge gegen die der Lauffläche 15 abgewandte Rückseite 17 an dem zweiten Schienensegment 12 abstützt. Zwischen der Druckverteilerleiste 20 und der Lauffläche 15 befindet sich daher nur die Blechdicke des Profilabschnitts 16. Die Maßhaltigkeit der Blechdicke ist allerdings gut, da sich gezeigt hat, dass die zum Herstellen der Schienensegmente 11, 12 verwendeten Metallbleche fast immer von guter Maßhaltigkeit sind, was ihre reine Materialdicke, d. h. ihre Blechdicke betrifft.

Die Druckverteilerleiste 20 bildet daher mit ihrer geraden, flachen Oberseite ein "glättendes" Ausgleichselement, welches sich unter Druckausübung von unten gegen jenen Profilabschnitt 16 abstützt, der auf seiner Oberseite die Lauffläche 15 bildet. Voraussetzung für die Wirksamkeit der Druckverteilerleiste 20 ist, dass ihre Oberseite im Wesentlichen flach ist und von einer Breite, die maximal gleich der Breite der Lauffläche 15 ist, und dass sie einer nach oben gerichteten Druckbelastung unterliegt. Diese Druckbelastung wird durch Druckübertragungselemente 21 erreicht, die in Fig. 6b lediglich schematisch anhand vertikaler Druckpfeile wiedergegeben sind. Konkrete Ausführungsbeispiele der Druckübertragungselemente 21 werden nachfolgend anhand der Figuren 2 bis 5 wiedergegeben.

Es ist nicht zwingend dass, wie in Fig. 6b wiedergegeben, zwei getrennte Druckübertragungselemente 21 vorhanden sind. Auch schon ein einziges Druckübertragungselement 21 ist im Fall seiner Abstützung gegenüber einem in Bezug auf das Gestell 3 starr angeordneten Widerlager in der Lage, die erforderliche Druckkraft bereitzustellen, welche die Druckverteilerleiste 20 dauerhaft von unten gegen die horizontalen Profilabschnitte 16 der Schienensegmente 11, 12 drückt.

In den Figuren 2 und 3 ist eine erste Ausführungsform wiedergegeben. Die beiden Schienensegmente 11, 12 sind von C-förmigem Profilquerschnitt, wie auch in Fig. 1 wiedergegeben. Mittels Schrauben 27 sind die zwei Schienensegmente 11, 12 direkt an der vertikalen Stütze 1 des Gestells 3 angeschraubt.

Im Verbindungsbereich der Schienensegmente 11, 12 ist in diese eine Konsole 30 eingesetzt. Die Konsole 30 ist z. B. von S-förmigem Querschnitt. Sie ist in Schienenlängsrichtung von solcher Länge, dass sie sich mit einem Teil ihrer Länge in dem Schienensegment 11, und mit dem übrigen Teil ihre Länge in dem Schienensegment 12 befindet.

Die Konsole 30 ist ein kurzes Profil, welches fest mit beiden Schienensegmenten 11, 12 verbunden ist. Die Konsole 30 ist mit Profilabschnitten 31, welche von den die Lauffläche 15 bildenden Profilabschnitten 16 nach unten ragen, durch eine erste Verschraubung 30A verbunden. Außerdem ist die Konsole 30 mit den vertikalen Profilabschnitten 13, welche an dem Gestell 3 befestigt sind, durch eine zweite Verschraubung 30B verbunden. Die Verschraubungen 30A, 30B erfolgen mittels Schrauben, welche durch Öffnungen in der Konsole 30, in den Profilabschnitten 31 und 13 der Schienensegmente und außerdem durch Öffnungen in der Stütze 1 hindurchführen.

Die in beiden Schienensegmenten 11, 12 sitzende Konsole 30 bildet mit den Schienensegmenten 11, 12 eine zwar feste aber nicht unbedingt gänzlich starre Baugruppe. In dieser Baugruppe bildet die Konsole 30 das erforderliche Widerlager 22 beim Andrücken der Druckverteilerleiste 20 gegen den Profilabschnitt 16.

Als einstellbares Druckübertragungselement 21 dient an jedem der Schienensegmente 11, 12 jeweils eine Schraube 40. Deren Gewinde ist mit einem entsprechenden Innengewinde an der Konsole 30 verschraubt. Die Stirnseite jeder Schraube 40 ist zur Druckausübung gegen die Druckverteilerleiste 20 abgestützt, die bei dem Ausführungsbeispiel eine Unterseite aufweist, die sich parallel zu der Oberseite erstreckt. Die Druckverteilerleiste 20 ist hier als ein länglicher Quader gestaltet.

Als Widerlager 22 dient das Innengewinde an der Konsole 30. Zum Verdrehen der Schraube 40 und damit Einstellen des Drucks auf die Druckverteilerleiste 20 ist die Schraube 40 an ihrem anderen, unteren Ende mit Schlüsselflächen 41 zum Ansetzen eines geeigneten Werkzeugs, z. B. eines Innensechskantschlüssels, versehen. Ein unterer Profilabschnitt 36 der Segmente 11, 12 ist in Verlängerung der Schraube 40 mit einer Öffnung 37 für das Hindurchführen des Werkzeugs versehen.

Die Konsole 30 kann von gleicher Länge sein wie die Druckverteilerleiste 20 oder von größerer oder geringerer Länge. Jedoch sind sowohl die Konsole 30, als auch die Druckverteilerleiste 20 kürzer als die Schienensegmente 11, 12, da sie sich nur über die Endbereiche der Schienensegmente 11, 12 erstrecken.

Bei der Ausführungsform nach Fig. 2 und Fig. 3 erstreckt sich die Konsole 30 teils in dem einen, teils in dem anderen Schienensegment. Alternativ ist es auch möglich, zwei nur halb so lange Konsolen zu verwenden, wobei die erste Konsole nur in dem ersten Schienensegment 11, und die zweite Konsole nur in dem zweiten Schienensegment 12 angeordnet und befestigt ist. Jedoch ist es auch in diesem Fall zwingend, dass nur eine Druckverteilerleiste 20 vorhanden ist, da nur so der Höhenausgleich erzielbar ist.

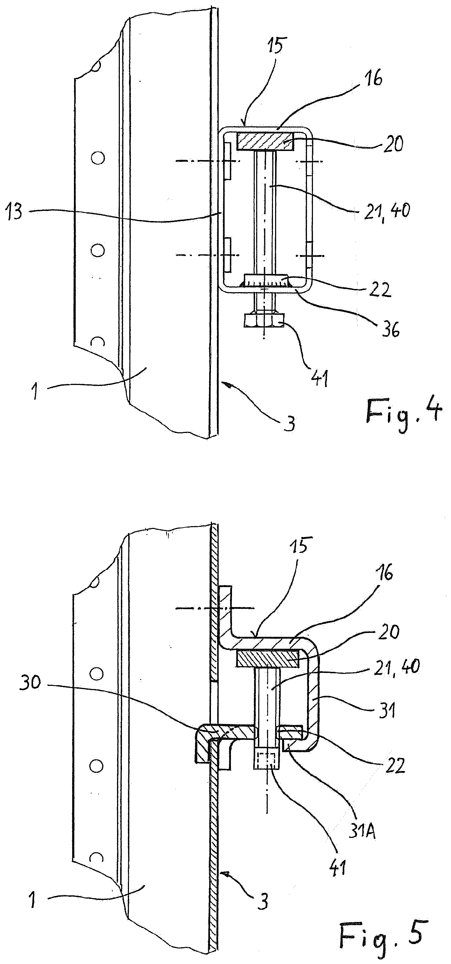

In Fig. 4 ist eine zweite, deutlich vereinfachte Ausführungsform wiedergegeben. Die Schienensegmente 11, 12 sind hier jeweils mit dem Gestell 3 verschraubte, geschlossene Rechteck-Hohlprofile. Die gegen die gemeinsame Druckverteilerleiste 20 abgestützten Druckübertragungselemente 21 sind wiederum Schrauben 40. Das gestellfeste Widerlager 22 befindet sich aber nicht an einer zusätzlichen Konsole, sondern an dem unteren Profilabschnitt 36 des Rechteckprofils. Für eine erhöhte Belastbarkeit ist innen an dem Profilabschnitt 36 eine Mutter angeschweißt, an der sich das Innengewinde zur Einstellung der Schraube 40 befindet.

Wie bei der ersten Ausführungsform drücken die Schrauben 40 mit ihrem anderen Ende von unten gegen die gemeinsame Druckverteilerleiste 20, welche sich wiederum an der Rückseite 17 jener Profilabschnitte 16 abstützt, welche oben die Laufflächen 15 bilden.

In Fig. 5 ist eine dritte Ausführungsform wiedergegeben. Sie zeichnet sich durch einfache Montierbarkeit und dadurch aus, dass die Bauhöhe der Schienensegmente einschließlich der als Widerlager dienenden Konsole 30 relativ gering ist. Die Schienensegmente 11, 12 sind hier von nach unten offenem Querschnitt. Ein kurzer horizontaler Profilabschnitt 31A der Segmente bildet eine Auflage, auf der sich die Konsole 30 mit ihrem einen Längsrand abstützt, während die Konsole 30 an ihrem anderen Längsrand in die vertikale Stütze 1 eingehängt ist. Die Konsole 30 ist daher ohne Verschraubungen montiert.

Zum Einhängen der mit Haken versehenen Konsole 30 ist die Stütze 1 mit entsprechenden Öffnungen versehen. Wiederum ist die Konsole 30 mit einem Innengewinde versehen, welches das eigentliche Widerlager 22 bildet und in welches die als Druckübertragungselement 21 dienende Schraube 40 mit ihrem Außengewinde eingreift.

Die Konsole 30 erstreckt sich wahlweise über die Endbereiche beider Schienensegmente 11, 12, oder es sind zwei getrennte Konsolen 30 vorhanden, wobei sich die eine Konsole nur in dem einen Schienensegment 11, und die andere Konsole nur in dem anderen Schienensegment 12 befindet. Aber wiederum ist die Druckverteilerleiste 20 durchgehend, wie in Fig. 6b wiedergegeben.

### Bezugszeichenliste

- 1: Stütze
- 2: horizontaler Träger, Traverse
- 3: Gestell
- 5: Verteilerfahrzeug, Shuttle
- 6: Gasse
- 7: Ware
- 8: Rolle

- 10: Schiene
- 11: Schienensegment
- 12: Schienensegment
- 13: vertikaler Profilabschnitt, Befestigungsabschnitt
- 14: Konsole
- 15: Lauffläche
- 16: Profilabschnitt
- 17: Rückseite (Unterseite)

- 20: Druckverteilerleiste
- 21: Druckübertragungselement
- 22: Widerlager
- 27: Schrauben

- 30: Konsole
- 30A: Verschraubung
- 30B: Verschraubung
- 31: weiterer Profilabschnitt
- 31A: horizontaler Profilabschnitt
- 36: unterer Profilabschnitt
- 37: Öffnung

- 40: Schraube
- 41: Schlüsselfläche

## Patentansprüche

1. Warenlager, insbesondere Shuttlelager, mit einem aus Profilelementen zusammengesetzten Gestell (3) für die Warenlagerung und mit mindestens einer Gasse (6) für den Transport ein- und auszulagernder Waren (7) mittels eines auf Schienen (10) längs der Gasse (6) verfahrbaren Verteilerfahrzeuges (5), wobei die Schienen (10) an dem Gestell (3) befestigt sind und jeweils aus in Schienenlängsrichtung aufeinanderfolgenden Schienensegmenten (11, 12) zusammengesetzt sind, wobei die Schienensegmente (11, 12) jeweils Profile mit einem Profilabschnitt (16) sind, dessen Oberseite die Lauffläche (15) für das Verteilerfahrzeug (5) bildet, wobei eine im Bereich zweier aufeinanderfolgender Schienensegmente (11, 12) angeordnete Druckverteilerleiste (20) mit einem Teil ihrer Länge gegen den die Lauffläche (15) bildenden Profilabschnitt (16) des ersten Schienensegments (11), und mit dem übrigen Teil ihrer Länge gegen den die Lauffläche (15) bildenden Profilabschnitt (16) des zweiten Schienensegments (12) abgestützt ist, und **dadurch gekennzeichnet, dass** mindestens ein Druckübertragungselement (21) einerseits von unten gegen die Druckverteilerleiste (20) und andererseits gegenüber einem in Bezug auf das Gestell (3) starr angeordneten Widerlager (22) abgestützt ist.

2. Warenlager nach Anspruch 1, **dadurch gekennzeichnet, dass** das Druckübertragungselement (21) hinsichtlich seiner Länge und/oder seiner Position in Richtung senkrecht zur Lauffläche (15) einstellbar ausgebildet ist.

3. Warenlager nach Anspruch 2, **gekennzeichnet durch** eine Schraube (40) oder einen Schraubbolzen als Druckübertragungselement (21).

4. Warenlager nach einem der vorangehenden Ansprüche, **dadurch gekennzeichnet, dass** sich das Widerlager (22) an einer Konsole (30) befindet, welche mit dem Schienensegment (11, 12) zumindest in Richtung senkrecht zur Lauffläche (15) verbunden ist.

5. Warenlager nach Anspruch 4, **dadurch gekennzeichnet, dass** die Schienensegmente (11, 12) einen von dem die Lauffläche (15) bildenden Profilabschnitt (16) nach unten führenden, weiteren Profilabschnitt (31) aufweisen, mit dem die Konsole (30) verbunden ist.

6. Warenlager nach Anspruch 4 oder 5, **gekennzeichnet durch** zwei Konsolen (30), wobei die erste Konsole nur mit dem ersten Schienensegment (11) und die zweite Konsole nur mit dem zweiten Schienensegment (12) verbunden ist.

7. Warenlager nach Anspruch 4 oder 5, **dadurch gekennzeichnet, dass** die Konsole (30) sowohl mit dem ersten Schienensegment (11) als auch mit dem zweiten Schienensegment (12) verbunden ist.

8. Warenlager nach Anspruch 7, **dadurch gekennzeichnet, dass** jedes Schienensegment (11, 12) mit einem daran ausgebildeten Befestigungsabschnitt (13) unmittelbar gegen eine Montagefläche des Gestells (3) befestigt ist, an der die Konsole (30) nur mittelbar unter Zwischenlage des Befestigungsabschnitts (13) befestigt ist.

9. Warenlager nach einem der vorangehenden Ansprüche, **gekennzeichnet durch** insgesamt zwei Druckübertragungselemente (21), die einerseits beide gegen die Druckverteilerleiste (20) abgestützt sind und die andererseits an getrennten Widerlagern (22) abgestützt sind, von denen das erste Widerlager (22) auf der Länge des ersten Schienensegments (11), und das zweite Widerlager (22) auf der Länge des zweiten Schienensegments (12) angeordnet ist.

## Claims

1. Warehouse, in particular shuttle warehouse, having a rack (3), composed of profile elements, for the warehousing, and having at least one aisle (6) for the transport of goods (7), which are to be stored and retrieved, by means of a distribution vehicle (5) which is movable along the aisle (6) on rails (10), wherein the rails (10) are fastened to the rack (3) and are respectively composed of rail segments (11, 12) following one upon another in the longitudinal direction of the rail, wherein the rail segments (11, 12) are respectively profiles having a profile section (16) whose top side forms the running surface (15) for the distribution vehicle (5), wherein a pressure distribution bar (20) arranged in the region of two successive rail segments (11, 12) is supported with a part of its length against that profile section (16) of the first rail segment (11) that forms the running surface (15), and with the remaining part of its length against that profile section (16) of the second rail segment (12) that forms the running surface (15), and **characterized in that** at least one pressure transmission element (21) is supported, on the one hand, from below against the pressure distribution bar (20) and, on the other hand, against a counter bearing (22) arranged rigidly with respect to the rack (3).

2. Warehouse according to Claim 1, **characterized in that** the pressure transmission element (21) is configured such that it is adjustable in terms of its length and/or its position in a direction perpendicular to the running surface (15).

3. Warehouse according to Claim 2, **characterized by** a screw (40) or a stud bolt as the pressure transmission element (21).

4. Warehouse according to one of the preceding claims, **characterized in that** the counter bearing (22) is located on a bracket (30), which is connected to the rail segment (11, 12) at least in a direction perpendicular to the running surface (15).

5. Warehouse according to Claim 4, **characterized in that** the rail segments (11, 12) have a further profile section (31), which leads downwards from the profile section (16) forming the running surface (15) and to which the bracket (30) is connected.

6. Warehouse according to Claim 4 or 5, **characterized by** two brackets (30), wherein the first bracket is connected only to the first rail segment (11), and the second bracket only to the second rail segment (12).

7. Warehouse according to Claim 4 or 5, **characterized in that** the bracket (30) is connected both to the first rail segment (11) and to the second rail segment (12).

8. Warehouse according to Claim 7, **characterized in that** each rail segment (11, 12) is fastened with a thereon configured fastening portion (13) directly against a mounting surface of the rack (3), to which mounting surface the bracket (30) is fastened only indirectly, with the interposition of the fastening portion (13).

9. Warehouse according to one of the preceding claims, **characterized by,** in total, two pressure transmission elements (21), which, on the one hand, are both supported against the pressure distribution bar (20) and which, on the other hand, are supported against separate counter bearings (22), of which the counter bearing (22) is arranged on the length of the first rail segment (11), and the second counter bearing (22) on the length of the second rail segment (12).

## Revendications

1. Entrepôt, en particulier entrepôt navette, comprenant un bâti (3) assemblé à partir d'éléments profilés pour l'entreposage de marchandises, et au moins une allée (6) pour le transport de marchandises (7) à entrer et à sortir du stock au moyen d'un véhicule de distribution (5) pouvant se déplacer sur des rails (10) le long de l'allée (6), les rails (10) étant fixés au bâti (3) et étant assemblés respectivement à partir de segments de rail (11, 12) consécutifs dans une direction de rail longitudinale, les segments de rail (11, 12) étant respectivement des profilés dotés d'une section de profilé (16) dont la face supérieure constitue la surface de roulement (15) destinée au véhicule de distribution (5), dans lequel une glissière de répartition de pression (20) disposée dans la zone de deux segments de rail consécutifs (11, 12) prend appui sur une partie de sa longueur contre la section de profilé (16) du premier segment de rail (11) constituant la surface de roulement (15) et prend appui sur le reste de sa longueur contre la section de profilé (16) du deuxième segment de rail (12) constituant la surface de roulement (15), et
**caractérisé en ce qu'**au moins un élément de transmission de pression (21) prend appui d'une part par le bas contre la glissière de répartition de pression (20), et prend appui d'autre part à l'opposé d'une butée (22) disposée de manière rigide par rapport au bâti (3).

2. Entrepôt selon la revendication 1, **caractérisé en ce que** l'élément de transmission de pression (21) est réalisé de manière réglable en longueur et/ou en position dans la direction perpendiculaire à la surface de roulement (15).

3. Entrepôt selon la revendication 2, **caractérisé par** une vis (40) ou un boulon fileté comme élément de transmission de pression (21).

4. Entrepôt selon l'une quelconque des revendications précédentes, **caractérisé en ce que** la butée (22) se trouve sur une console (30) qui est reliée au segment de rail (11, 12) au moins dans la direction perpendiculaire à la surface de roulement (15).

5. Entrepôt selon la revendication 4, **caractérisé en ce que** les segments de rail (11, 12) présentent une autre section de profilé (31) qui va vers le bas à partir de la section de profilé (16) constituant la surface de roulement (15) et à laquelle la console (30) est reliée.

6. Entrepôt selon la revendication 4 ou 5, **caractérisé par** deux consoles (30), la première console n'étant reliée qu'au premier segment de rail (11) et la deuxième console n'étant reliée qu'au deuxième segment de rail (12).

7. Entrepôt selon la revendication 4 ou 5, **caractérisé en ce que** la console (30) est reliée à la fois au premier segment de rail (11) et au deuxième segment de rail (12).

8. Entrepôt selon la revendication 7, **caractérisé en ce que** chaque segment de rail (11, 12) est fixé à une section de fixation (13) réalisée sur celui-ci directement contre une surface de montage du bâti (3) à laquelle la console (30) n'est fixée qu'indirectement avec interposition de la section de fixation (13).

9. Entrepôt selon l'une quelconque des revendications précédentes, **caractérisé par** un total de deux éléments de transmission de pression (21) qui prennent appui tous les deux d'une part contre la glissière de répartition de pression (20) et qui prennent appui d'autre part sur des butées séparées (22), dont la première butée (22) est disposée sur la longueur du premier segment de rail (11) et la deuxième butée (22) est disposée sur la longueur du deuxième segment de rail (12).
